# FASCICULE DE BREVET EUROPEEN

(11) **EP 0 593 342 B1**
(45) Date de publication et mention de la délivrance du brevet: **27.12.1996**
(21) Numéro de dépôt: 93402473.8
(22) Date de dépôt: 07.10.1993
(51) Int. Cl.: B60G 7/00

(54) **Bras de suspension pour véhicule automobile**
Aufhängungsarm für ein Kraftfahrzeug
Suspension arm for a motor vehicle

(30) Priorité: 12.10.1992 FR 9212161
(43) Date de publication de la demande: 20.04.1994
(73) Titulaire: SOLLAC, F-92800 Puteaux (FR)
(72) Inventeur: Reynaert, Alain, F-60290 Laigneville (FR)
(74) Mandataire: Lanceplaine, Jean-Claude

(56) Documents cités:
- EP-A- 0 036 845
- EP-A- 0 199 885
- DE-A- 3 624 537
- DE-A- 3 718 795
- DE-A- 3 925 107
- DE-A- 4 142 587
- FR-A- 2 498 129
- FR-A- 2 591 155
- US-A- 4 570 968
- PATENT ABSTRACTS OF JAPAN vol. 12, no. 18 (M-660)(2865) 20 Janvier 1988 & JP-A-62 178 408 (TOYOTA)

## Description

La présente invention a pour objet un bras de suspension pour véhicule automobile.

Les suspensions du type Mac PHERSON équipant les trains avant de véhicules automobiles comportent une pièce dénommée bras de suspension qui permet de réaliser une liaison entre le moyeu de chaque roue et le berceau moteur.

A cet effet, le bras de suspension est composé d'un corps muni d'au moins trois points d'attache comprenant un axe d'articulation arrière, une pièce de liaison avec le berceau moteur et une pièce support d'une rotule de roue.

Les bras de suspension peuvent être réalisés par forgeage, ce qui donne une pièce massive, ou encore par assemblage de deux coquilles matricées et soudées entre elles pour former un caisson.

La réalisation en forme de caisson permet de diminuer le poids du bras de suspension, par rapport à un bras forgé, mais elle ne permet pas d'obtenir un poids de bras de suspension minimum.

Or, les constructeurs automobiles s'orientent de plus en plus vers l'allégement des éléments constituant les véhicules, comme par exemple l'amincissement en épaisseur des tôles de carrosserie, ou encore le choix d'un matériau de densité plus faible que l'acier, en particulier pour des parties ne supportant pas de contraintes mécaniques importantes.

On connaît dans le brevet JP-A-62 178 408 un bras de suspension, du type comportant un corps muni d'au moins trois points d'attache. Ce corps comprend une coquille formée d'un profité de section en forme de U dont les extrémités libres des branches parallèles comportent chacune un bord tombé s'étendant parallèlement au fond du profilé. Ce profilé est cintré dans un plan parallèle au fond dudit profilé et comporte une tôle pliée en forme de U, soudée au profilé en au moins deux points de liaison.

On connaît également dans le brevet EP-A- 0 199 885 une béquille d'un bras de suspension comportant un corps formé d'un profilé en forme de U et deux flasques fixées sur les faces latérales du profilé. Ce profilé est cintré et une tôle pliée au forme de U est fixée sur chaque côté du profilé.

Cette béquille présente un poids important compte tenu du nombre de pièces qui la compose.

La présente invention a pour but de proposer un bras de suspension notamment pour train avant de véhicule automobile qui présente dans sa conception un poids réduit en recherchant une optimisation entre la tenue mécanique et la masse.

La présente invention a donc pour objet un bras de suspension notamment pour train avant de véhicule automobile, du type comportant un corps muni d'au moins trois points d'attache comprenant un axe d'articulation arrière, une pièce support d'une rotule de roue et une pièce de liaison avec un berceau moteur, le corps comprenant, d'une part, une coquille formée d'un profilé de section en forme de U dont les extrémités libres des branches parallèles comportent chacune un bord tombé s'étendant parallèlement au fond du profilé, ledit profilé étant cintré dans le plan du fond du profilé et, d'autre part, d'une tôle pliée en forme de U, soudée au profité en au moins deux points de liaison, caractérisé en ce que la tôle forme une béquille disposée du côté de la concavité du cintre du profité, l'une des ailes du U de la tôle s'appuyant sur l'extérieur du fond du profité et l'autre aile s'appuyant sur les deux bords tombés de ce profité en fermant partiellement ledit profité.

Selon d'autres caractéristiques de l'invention :
- au moins une extrémité de la coquille comporte une plaque fixée sur les bords tombés du profilé et formant un logement,
- l'articulation arrière se compose d'un tube dont une extrémité est aplatie pour former une pâte de fixation soudée à une extrémité de la coquille,
- la pièce de liaison avec le berceau moteur se compose d'un support comprenant un boîtier muni d'un silent bloc et d'une chape dont les deux branches parallèles sont disposées chacune de part et d'autre et transversalement à la coquille, l'une desdites branches fermant la partie supérieure du profilé,
- la branche de la chape femant la partie supérieure du profilé peut s'étendre jusqu'à la béquille et est reliée à celle-ci par soudage,
- la pièce support de la rotule de roue est insérée dans le logement formé par la plaque et le profilé et est fixée à ces deux éléments par des organes de liaison traversant la pièce support, la plaque et le profilé,
- le profilé est obtenu par emboutissage d'un flan de tôle de 2 à 3mm d'épaisseur, en acier dont la limite élastique est supérieure à 300 Mpa,
- la béquille est obtenue par pliage d'un flan de tôle de 1,5 à 2mm d'épaisseur, en acier dont la limite élastique est supérieure à 400 Mpa.

L'invention sera mieux comprise à l'aide de la description qui va suivre, donnée uniquement à titre d'exemple et faite en se référant aux dessins annexés, sur lesquels :

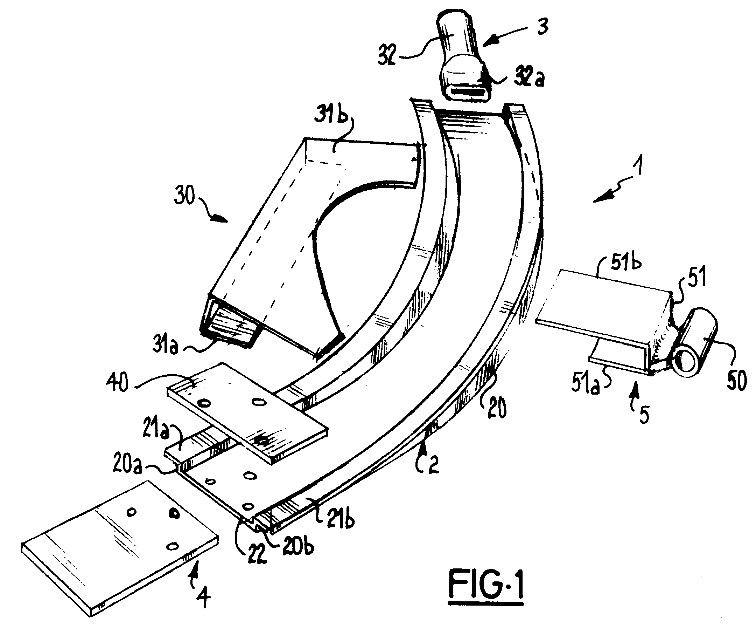

- la Fig. 1 est une vue en perspective éclatée d'un bras de suspension selon l'invention,
- la Fig. 2 est une vue de dessus du bras de suspension.

Comme représenté sur les figures, le bras de suspension notamment pour train avant de véhicule automobile se compose d'un corps désigné dans son ensemble par la référence 1 et muni d'au moins trois points d'attache avec différents organes du train avant.

Ces points d'attache comprennent, par exemple, un axe d'articulation arrière 3, une pièce support 4 d'une rotule de roue non représentée et une pièce de liaison 5 avec un berceau moteur non représenté.

Le corps 1 peut également comporter un point d'attache avec un axe de biellette de raccordement avec une barre antidévers non représentée.

Le corps 1 du bras de suspension comprend une unique coquille 2 formée d'un profilé 20 de section en forme de U dont les extrémités libres des branches parallèles 20a et 20b comportent chacune un bord tombé, respectivement 21a et 21b s'étendant parallèlement au fond 22 du profilé 20.

Le profilé 20 est cintré dans un plan perpendiculaire au plan passant par l'axe longitudinal de symétrie dudit profilé, c'est à dire que le profilé 20 est cintré dans le plan du fond 22 dudit profilé 20.

La coquille 2 est mise en forme par exemple par emboutissage d'un flan de tôle de 2 à 3 mm d'épaisseur et de préférence égale à 2,5mm d'épaisseur.

Cet acier a une caractéristique mécanique en limite élastique supérieure à 300 MPa et de préférence égale à 350 Mpa pour supporter les contraintes mécaniques du bras de suspension.

La profondeur du profilé 20 est plus importante au milieu que sur les extrémités de façon à augmenter sensiblement la rigidité de ce profilé dans cette zone.

Le corps 2 du bras de suspension comporte également une béquille 30 disposée dans le cintre du profilé 20 et reliée audit profilé en au moins deux points de liaison.

Cette béquille 20 est formée à partir d'une tôle pliée en forme de U comportant deux ailes 31a et 31b parallèles.

La béquille 30 est disposée sur le profilé 20 de telle manière que l'aile 31a s'appuie sur l'extérieur du fond 22 du profilé 20 et que l'aile 31b s'appuie sur les deux bords tombés 21a et 21b de ce profilé 20.

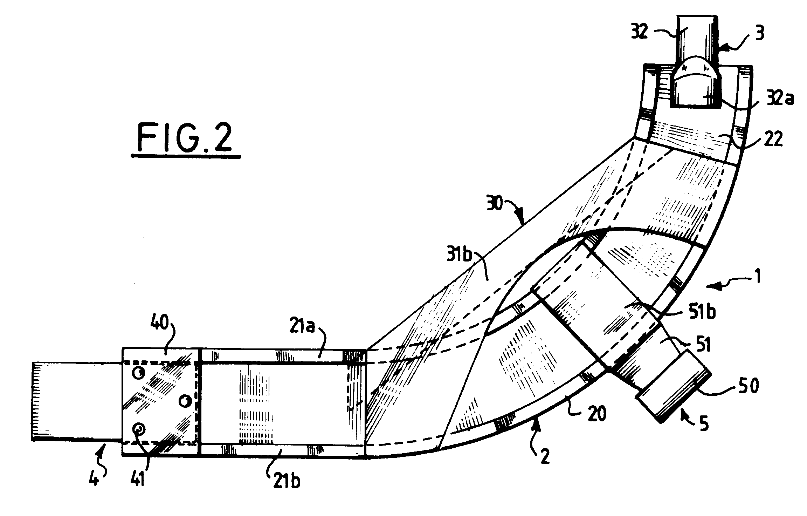

L'aile 31b comporte une découpe en forme d'arc de cercle et ferme partiellement le profilé 20 comme représenté sur la Fig. 2.

De préférence, le profilé 20 et la béquille 30 sont soudés l'un à l'autre au moyen d'un faisceau laser.

La béquille 30 du fait de sa forme simplifiée peut être réalisée dans une tôle d'acier de très haute caractéristique mécanique, ce qui permet d'alléger le poids du bras de suspension de façon conséquente.

La béquille 30 est obtenue par pliage d'un flan de tôle en acier de 1,5 à 2,5 mm d'épaisseur et de préférence égale à 2mm d'épaisseur.

Cet acier possède une caractéristique mécanique en limite élastique supérieure à 400 Mpa et de préférence comprise entre 400 et 750 Mpa.

A une extrémité de la coquille 2, l'axe d'articulation arrière 3 est réalisé à partir d'un tube creux 32 dont une extrémité 32a est aplatie pour former une pâte de fixation soudée sur le profilé 20.

L'autre extrémité de la coquille 2, c'est à dire l'extrémité opposée à celle recevant l'axe d'articulation arrière 3, comporte une pièce support 4 d'une rotule de roue.

Cette pièce support 4 est insérée dans un logement formé par l'extrémité du profilé 20 et par une plaque 40 fixée sur les bords tombés 21a et 21b du profilé 20 et qui ferme ledit profilé 20.

La pièce support 4 est fixée à la coquille 2 et à la plaque 40 par des organes de liaison 41, constitués par exemple par des boulons, traversant la pièce support 4, la plaque 40 et le profilé 20.

Le bras de suspension 1 comporte également une pièce de liaison 5 avec le berceau moteur du véhicule.

Cette pièce de liaison 5 est placée du côté de la convexité de la coquille 2 et se compose d'un support comprenant un boîtier 50 muni d'un silent bloc et d'une chape 51.

Cette chape 51 comporte deux ailes parallèles, respectivement 51a et 51b.

Les branches 51a et 51b sont disposées chacune de part et d'autre et transversalement à la coquille 2.

La branche 51a s'appuie sur l'extérieur du fond 22 du profilé 20 et la branche 51b s'appuie sur les deux bords tombés 21a et 21b de ce profilé 20 en fermant partiellement ledit profilé.

La chape 51 est fixée sur le profilé 20 par exemple par soudage.

La branche 51b de la chape 51 peut s'étendre jusqu'à la béquille 30 et être reliée à celle-ci également par soudage.

Une telle conception du bras de suspension apporte plusieurs avantages.

Ce bras de suspension permet l'encaissement des contraintes mécaniques en flexion dans le plan de cintrage du profilé et en torsion générées par les trois points d'attache disposés en triangle.

La répartition des masses et des charges assure au bras de suspension une légèreté remarquable. Les bras de suspension réalisés en deux coquilles superposées pèsent environ 1,8 Kg ou plus, alors que le bras de suspension selon la présente invention, pour les mêmes caractéristiques mécaniques, pèsent environ 1,4 Kg ce qui procure un gain de poids d'environ 25%.

## Revendications

1. Bras de suspension notamment pour train avant de véhicule automobile, du type comportant un corps (1) muni d'au moins trois points d'attache comprenant un axe d'articulation arrière (3), une pièce support (4) d'une rotule de roue et une pièce de liaison (5) avec un berceau moteur, le corps (1) comprenant, d'une part, une coquille (2) formée d'un profilé (20) de section en forme de U dont les extrémités libres des branches parallèles (20a, 20b) comportent chacune un bord tombé (21a, 21b) s'étendant parallèlement au fond (22) du profilé, ledit profilé (20) étant cintré dans le plan du fond (22) du profilé (20) et, d'autre part, d'une tôle (30) pliée en forme de U, soudée au profilé en au moins deux points de liaison, caractérisé en ce que la tôle forme une béquille (30) disposée du côté de la concavité du cintre du profilé (20), l'une (31a) des ailes de U de la tôle (30) s'appuyant sur l'extérieur du fond (22) du profilé (20) et l'autre aile (31b) s'appuyant sur les deux bords tombés (21a, 21b) de ce profilé en fermant partiellement ledit profilé.

2. Bras de suspension suivant la revendication 1, caractérisé en ce qu'au moins une extrémité de la coquille (2) comporte une plaque (40) fixée sur les bords tombés (21a, 21b) du profilé (20) et formant un logement.

3. Bras de suspension selon la revendication 1, caractérisé en ce que l'axe d'articulation arrière (3) se compose d'un tube (32) dont une extrémité (32a) est aplatie pour former une patte de fixation soudée à une extrémité de la coquille (2).

4. Bras de suspension selon la revendication 1, caractérisé en ce que la pièce de liaison (5) avec le berceau moteur se compose d'un support comprenant un boîtier (50) muni d'un silent bloc et d'une chape (51) dont les deux branches parallèles (51a, 51b) sont disposées chacune de part et d'autre et transversalement à la coquille (2), l'une (51b) desdites branches fermant la partie supérieure du profilé (20).

5. Bras de suspension selon la revendication 4, caractérisé en ce que la branche (51b) de la chape (51) fermant la partie supérieure du profilé (20) s'étend jusqu'à la béquille (30) et est liée à celle-ci par soudage.

6. Bras de suspension selon les revendications 1 et 2, caractérisé en ce que la pièce support (4) de la rotule de roue est insérée dans le logement formé par la plaque (40) et le profilé (20) et est fixée à ces deux éléments par des organes de liaison (41) traversant la pièce support (4), la plaque (40) et le profilé (20).

7. Bras de suspension selon l'une quelconque des revendications précédentes, caractérisé en ce que le profilé (20) est obtenu par emboutissage d'un flan de tôle de 2 à 3mm d'épaisseur, en acier dont la limite élastique est supérieure à 300MPa.

8. Bras de suspension selon la revendication 1, caractérisé en ce que la béquille (30) est obtenue par pliage d'un flan de tôle de 1,5 à 2,5 mm d'épaisseur, en acier dont la limite élastique est supérieure à 400Mpa et de préférence comprise entre 400 et 750 Mpa.

## Claims

1. Suspension arm, particularly for the forward suspension of a motor vehicle, of the type comprising a body (1) fitted with at least three attachment points comprising a rear articulation axis (3), a support member (4) of a wheel trunnion and a connector member (5) with an engine mount, the body (1) comprising on the one hand a shell (2) formed from a profile (20) with a U-shaped cross-section, the free ends of the parallel branches of which (20a, 20b) each comprising a cutoff edge (21a, 21b) extending parallel to the base (22) of the profile, said profile (20) being bent into the plane of the base (22) of the profile (20), and on the other hand, of a metal plate (30) folded in a U shape, welded to the profile at at least two connection points, characterised in that the plate forms a crutch (30) located laterally of the concavity of the bend of the profile (20), one (31a) of the wings of the U of the plate (30) being supported on the outside of the base (22) of the profile (20), and the other wing (31b) being supported on the two cutoff edges (21a, 21b) of this profile, partially closing said profile.

2. Suspension arm according to claim 1, characterised in that at least one end of the shell (2) comprises a plate (40) secured on the cutoff edges (21a, 21b) of the profile (20) and forming a housing.

3. Suspension arm according to claim 1, characterised in that the rear articulation axis (3) is composed of a tube (32) one end (32a) of which is flattened to form a securing lug welded to one end of the shell (2).

4. Suspension arm according to claim 1, characterised in that the connector member (5) with the engine mount is composed of a support comprising a casing (50) equipped with a shock mount and a cover (51) the two parallel branches (51a, 51b) of which are each disposed on one side and the other and transversely to the shell (2), one (51b) of the said branches closing the upper portion of the profile (20).

5. Suspension arm according to claim 4, characterised in that the branch (51b) of the cover (51) closing the upper portion of the profile (20) extends as far as the crutch (30) and is connected thereto by welding.

6. Suspension arm according to claims 1 and 2, characterised in that the support member (4) of the wheel trunnion is inserted into the housing formed by the plate (40), and the profile (20) is secured to these two members by the connector members (41) passing through the support member (4), the plate (40) and the profile (20).

7. Suspension arm according to any one of the preceding claims, characterised in that the profile (20) is obtained by swaging a sheet metal blank with a thickness of 2 to 3 mm, made of steel the elastic limit of which is greater than 300MPa.

8. Suspension arm according to claim 1, characterised in that the crutch (30) is obtained by folding a sheet metal blank of a thickness of 1.5 to 2.5 mm, made of steel the elastic limit of which is greater then 400MPa, and preferably comprised between 400 and 750MPa.

## Patentansprüche

1. Aufhängungsarm insbesondere für Kraftfahrzeuge von der Art, welche einen mit mindestens drei Anschlußpunkten ausgerüsteten Körper (1) aufweist, enthaltend eine hintere Gelenkachse (3), eine Halterung (4) für eine Doppelgelenk-Halbachse und ein Verbindungsstück (5) mit dem Motorblock, wobei der Körper (1) einerseits eine Schale (2) aus einem Profil (20) mit einem U-förmigen Querschnitt aufweist, bei dem die freien Enden der parallelen Schenkel (20a, 20b) jeweils einen abgebogenen Rand (21a, 21b) aufweisen, welcher sich parallel zum Grund (22) des Profils erstreckt, und dieses Profil (20) in der Ebene des Grundes (22) des Profils (20) gekrümmt ist, und andererseits ein U-förmig gebogenes Blech (30) aufweist, welches mit diesem Profil an mindestens zwei Verbindungspunkten verschweißt ist,
**dadurch gekennzeichnet**, **daß**
dieses Blech einen Stützfuß (30) bildet, welcher an der konkaven Seite der Krümmung des Profils (20) angeordnet ist, wobei sich einer der U-förmigen Schenkel (31a) des Bleches an der Außenseite des Grundes (22) des Profils (20) abstützt, während der andere Schenkel (31b) an den beiden abgebogenen Kanten (21a, 21b) dieses Profils anliegt und dieses Profil teilweise verschließt.

2. Aufhängungsarm nach Anspruch 1,
**dadurch gekennzeichnet**, **daß**
mindestens ein Endstück der Schale (2) eine Platte (40) aufweist, welche an den abgebogenen Kanten (21a, 21b) des Profils (20) befestigt ist und ein Lager bildet.

3. Aufhängungsarm nach Anspruch 1,
**dadurch gekennzeichnet**, **daß**
die hintere Gelenkachse (3) aus einem Rohr (32) besteht, bei dem ein Ende (32a) abgeflacht ist, um eine Befestigungslasche zu bilden, welche an ein Endstück der Schale (2) angeschweißt ist.

4. Aufhängungsarm nach Anspruch 1,
**dadurch gekennzeichnet**, **daß**
das Verbindungsstück (5) mit dem Motorblock aus einer Halterung besteht, welche ein Gehäuse (50) aufweist, das mit einem Silentbloc und einem Gabelgelenk (51) ausgerüstet ist, dessen beide parallele Schenkel (51a, 51b) jeweils an den Seiten und quer zu der Schale (2) angeordnet sind, wobei einer dieser Schenkel (51b) den oberen Teil des Profils (20) abschließt.

5. Aufhängungsarm nach Anspruch 4,
**dadurch gekennzeichnet**, **daß**
sich der den oberen Teil des Profils (20) abschließende Schenkel (51b) des Gabelgelenkes (51) bis zum dem Stützfuß (30) erstreckt und mit diesem verschweißt ist.

6. Aufhängungsarm nach den Ansprüchen 1 und 2,
**dadurch gekennzeichnet**, **daß**
die Halterung der Doppelgelenk-Halbachse in das Lager eingesetzt ist, welches durch die Platte (40) und das Profil (20) gebildet wird, und an diesen beiden Elementen mit Hilfe von Befestigungsorganen (41) befestigt ist, welche die Halterung (4), die Platte (40) und das Profil (20) durchqueren.

7. Aufhängungsarm nach einem der vorausgegangenen Ansprüche,
**dadurch gekennzeichnet**, **daß**
das Profil (20) durch Tiefziehen eines Stahlbleches mit einer Dicke von 2 bis 3 mm hergestellt wird, dessen Streckgrenze über 300 MPa liegt.

8. Aufhängungsarm nach Anspruch 1,
**dadurch gekennzeichnet**, **daß**
die Doppelgelenk-Halbachse (30) durch Verbiegen eines Stahlbleches mit einer Dicke von 1,5 bis 2,5 mm hergestellt wird, dessen Streckgrenze über 400 MPa, und vorzugsweise zwischen 400 und 750 MPa liegt.
